**Europäisches Patentamt**

**European Patent Office**

**Office européen des brevets**

(19)

(11) Veröffentlichungsnummer: **0 058 742**
**B1**

(12) # EUROPÄISCHE PATENTSCHRIFT

(45) Veröffentlichungstag der Patentschrift:
06.06.84

(21) Anmeldenummer: **81106501.0**

(22) Anmeldetag: **21.08.81**

(51) Int. Cl.³: **B 60 J 3/02**

(54) **Sonnenblende für Fahrzeuge.**

(30) Priorität: **18.02.81 DE 3105851**

(43) Veröffentlichungstag der Anmeldung:
**01.09.82 Patentblatt 82/35**

(45) Bekanntmachung des Hinweises auf die Patenterteilung:
**06.06.84 Patentblatt 84/23**

(84) Benannte Vertragsstaaten:
**BE DE FR GB IT NL SE**

(56) Entgegenhaltungen:
**FR - A - 1 102 219**
**FR - A - 1 143 365**
**FR - A - 2 099 564**
**FR - A - 2 446 738**

(73) Patentinhaber: **Gebr. Happich GmbH,**
**Postfach 10 02 49 Clausenbrücke 1,**
**D-5600 Wuppertal 1 (DE)**

(72) Erfinder: **Viertel, Lothar, V. Gartenreihe 28,**
**D-6630 Saarlouis (DE)**
Erfinder: **Köbel, Michael, VI. Gartenreihe 30,**
**D-6630 Saarlouis (DE)**
Erfinder: **Kaiser, Peter, Sellscheid 42,**
**D-5632 Wermelskirchen (DE)**

## Beschreibung

Die Erfindung bezieht sich auf eine Sonnenblende für Fahrzeuge mit einem Sonnenblendenkörper, der mit einem Bezugmaterial versehen ist.

Die Sonnenblendenkörper von Fahrzeugsonnenblenden sind im allgemeinen mit einem den Kern umgebenden Bezug versehen, wobei der Bezug im wesentlichen dazu dient, das optische Erscheinungsbild der Sonnenblende zu verbessern. Die Anbringung des Bezugs ist relativ schnell und einfach mittels einer Schweißelektrode durchzuführen, sofern das Bezugsmaterial schweißfähig ist, was insbesondere für Kunststoffolien zutrifft. Oftmals werden aber Sonnenblenden gewünscht, deren Bezug aus einem nicht schweißfähigen Material, wie textile Flächengebilde, Naturleder od. dgl. bestehen soll. Die Konfektionierung des Sonnenblendenkörpers mit einem Bezug aus nicht schweißfähigem Material verlangt jedoch bei den herkömmlichen Sonnenblenden einen erheblichen Arbeitsaufwand, weil die Bezugmaterialzuschnitte längs der umlaufenden Randkante des Sonnenblendenkörpers aneinandergenäht und/oder aneinandergeklebt werden müssen. Besondere Schwierigkeiten ergeben sich insbesondere dann, wenn der Sonnenblendenkörper nur an einer Breitseite mit Bezugmaterial versehen sein soll, weil sich dann nur eine vollflächige Verklebung des Bezugmaterials mit der entsprechenden Sonnenblendenseite anbietet. Eine solche vollflächige Verklebung erscheint arbeitsintensiv und teuer und gewährleistet keinen sauberen Randabschluß des Bezugmaterials.

Der Erfindung liegt nun die Aufgabe zugrunde, bei einer Sonnenblende der eingangs genannten Art den Aufbau des Sonnenblendenkörpers, insbesondere im Hinblick auf die Anordnung des Bezuges zu vereinfachen und die Herstellungskosten zu senken.

Zur Lösung dieser Aufgabe ist erfindungsgemäß vorgesehen, daß der Sonnenblendenkörper einen Klemmbereich zur Festlegung des an einer oder beiden seiner Breitseiten angeordneten Bezugmaterials aufweist.

Durch die Ausbildung eines Klemmbereichs am Sonnenblendenkörper kann der Bezug, gleichgültig ob er aus schweißfähigem oder nicht schweißfähigem Material besteht, nunmehr ohne arbeitsintensive Schweiß-, Näh- oder Klebemaßnahmen, nämlich durch einfaches Einklemmen seines Randbereiches in denkbar einfacher Weise am Sonnenblendenkörper festgelegt werden.

Erfindungsgemäß kann der Klemmbereich für die Aufnahme des umlaufenden Randbereichs wenigstens eines Bezugmaterialzuschnitts umlaufend ausgebildet sein und sich etwa in der Mitte der umlaufenden Randkante des Sonnenblendenkörpers befinden.

Diese Ausbildung ermöglicht es, in vorteilhafter Weise wahlweise eine oder beide Seiten des Sonnenblendenkörpers mit Bezugmaterial zu verkleiden, wobei die Unterbringung des Randbereichs des oder der Bezugmaterialzuschnitte im Klemmbereich des Sonnenblendenkörpers einen unbedingt sauberen, d. h. optisch einwandfreien Randabschluß gewährleistet.

Alternativ kann aber auch vorgesehen sein, daß der Klemmbereich an einer, vorzugsweise Längskante des Sonnenblendenkörpers ausgebildet ist.

Bei dieser Ausbildungsform bietet sich ein taschenförmig ausgebildeter, z. B. entsprechend zusammengenähter Bezug an, der den Sonnenblendenkörper aufnimmt und dessen Randbereiche an der offenen Taschenseite in den Klemmbereich des Sonnenblendenkörpers umgelegt und eingeklemmt sind.

Die besonderen Vorteile der Erfindung bestehen darin, daß nunmehr die Möglichkeit eröffnet worden ist, Sonnenblendenkörper in einfacher und kostengünstiger Weise wahlweise nur einseitig oder völlig umhüllt mit einem Bezug versehen zu können, der sowohl aus schweißfähigem Material wie auch aus nicht schweißfähigem Material, wie Stoff, Vlies oder einem sonstigen textilen Flächengebilde oder auch aus Leder bestehen kann. Durch das Einklemmen des Bezuges an dessen Randbereich entfällt nicht nur eine aufwendige Schweiß-, Näh- oder Klebearbeit, sondern es wird darüber hinaus auch eine völlig faltenfreie Anordnung des Bezugmaterials an dem Sonnenblendenkörper erzielt, und zwar überraschenderweise auch dann, wenn Sonnenblendenkörper mit konkav gestalteten Bereichen verwendet werden.

Vorteilhafte Ausgestaltungen und besonders zweckmäßige Weiterbildungen der Erfindung sind in den Unteransprüchen gekennzeichnet.

Die Erfindung und deren vorteilhafte Ausgestaltungen sowie zweckmäßige Weiterbildungen werden nachfolgend anhand von in der Zeichnung dargestellten Ausführungsbeispielen näher erläutert. Es zeigt

Fig. 1 einen Sonnenblendenkörper eines ersten Ausführungsbeispiels in Ansicht,

Fig. 2 eine Draufsicht nach Fig. 1,

Fig. 3 einen Sonnenblendenkörper eines zweiten Ausführungsbeispiels in Ansicht,

Fig. 4 eine Draufsicht nach Fig. 3,

Fig. 5 einen Schnitt durch den Sonnenblendenkörper nach Fig. 1 und 2, wobei die Einzelelemente des Sonnenblendenkörpers noch nicht miteinander verbunden sind,

Fig. 6 einen Teilschnitt durch den Sonnenblendenkörper nach Fig. 5 im Fertigzustand,

Fig. 7 einen Schnitt durch den Sonnenblendenkörper nach Fig. 3 und 4, wobei die Einzelteile noch nicht miteinander verbunden sind,

Fig. 8 einen Teilschnitt durch den Sonnenblendenkörper nach Fig. 7 im Fertigzustand,

Fig. 9 und 10 jeweils im Schnitt eine Einzelheit der Erfindung,

Fig. 11 ein drittes Ausführungsbeispiel eines Sonnenblendenkörpers im Schnitt,

Fig. 12 einen Sonnenblendenkörper eines vierten Ausführungsbeispiels in Ansicht,

Fig. 13 einen Schnitt A-A nach Fig. 12,

Fig. 14 einen weiteren Schnitt A-A nach Fig. 12 in einer gegenüber Fig. 13 abgewandelten Ausführungsform,

Fig. 15 eine Einzelheit des Sonnenblendenkörpers nach Fig. 12 und 14,

Fig. 16 bis 19 jeweils einen Querschnitt durch einen Sonnenblendenkörper, der aus zwei Einzelelementen zusammengesetzt ist, in jeweils unterschiedlicher Ausführungsform und

Fig. 20 eine Teilansicht des Einzelelements eines Sonnenblendenkörpers mit darauf angeordnetem Bezug.

Die Sonnenblende aller dargestellten Ausführungsbeispiele besteht aus einem Sonnenblendenkörper 1 mit einer an einem nicht gezeigten Drehlager anordbaren Lagerachse 2 und mit einem an einem nicht gezeigten Gegenlager anordbaren Lagerzapfen 3.

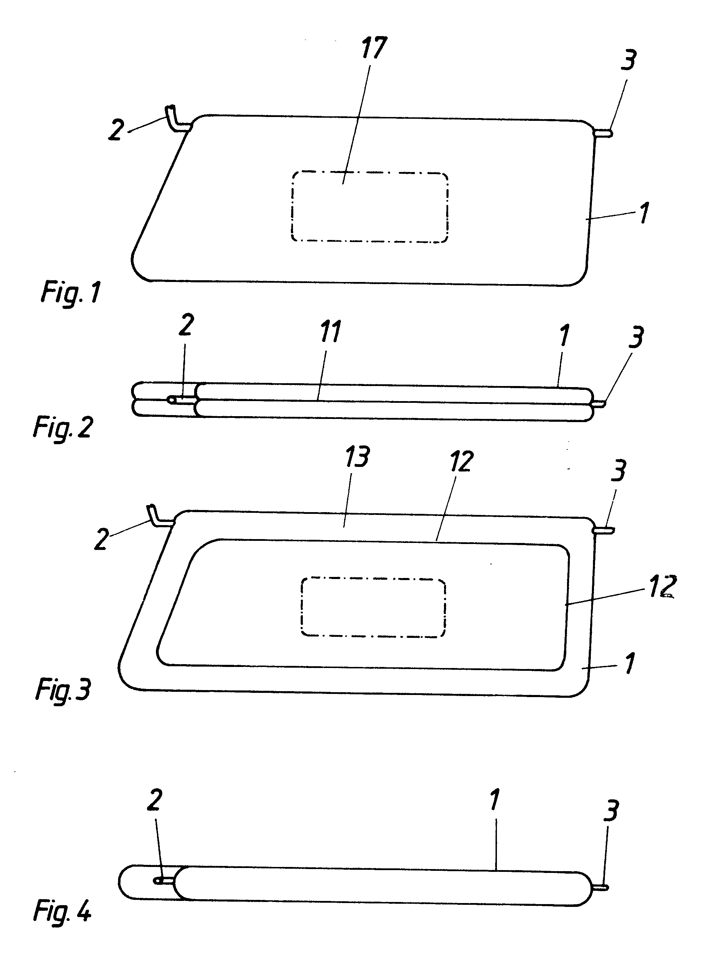

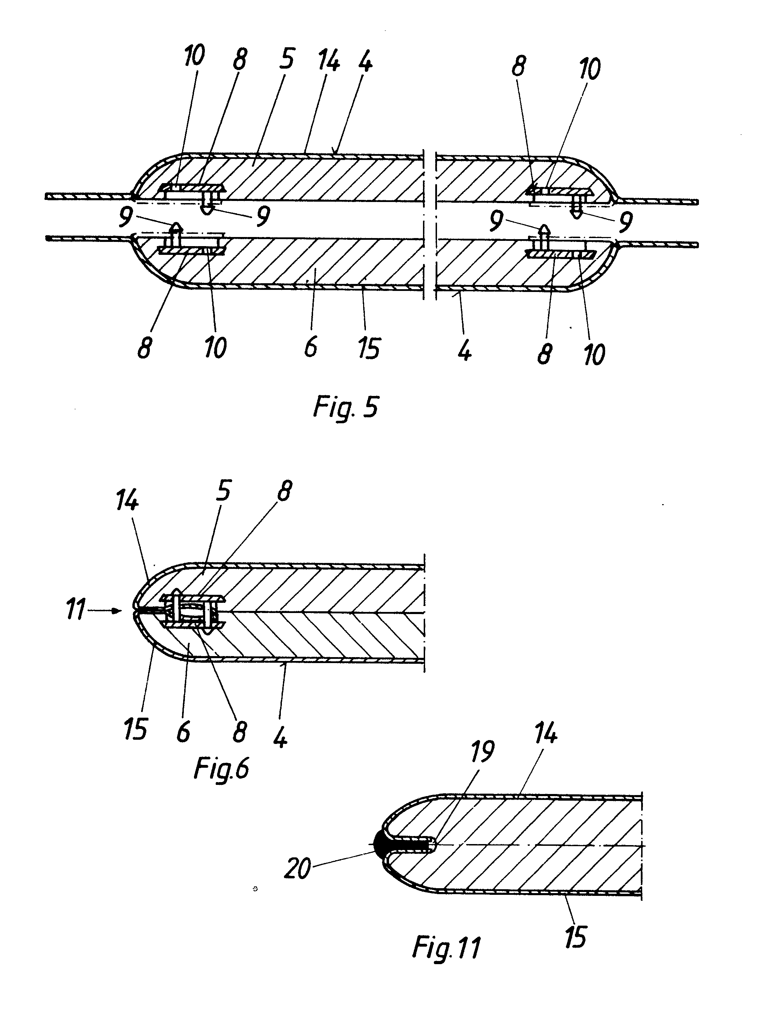

Der Sonnenblendenkörper 1 nach den Fig. 1 und 2 sowie 5 und 6 weist einen von einem Bezug 4 vollständig umgebenen Kern auf, der aus zwei Einzelelementen 5 und 6 besteht, die (vgl. insbesondere Fig. 6) flächig aneinanderliegen und miteinander verbunden sind. Vorzugsweise bestehen die Einzelelemente 5, 6 des Kerns aus einem Polstereigenschaften aufweisenden Kunststoffschaum mit darin eingelagerten Versteifungs- und Halteelementen. Als Versteifungselement kann z. B. ein in dem Kern eingelagerter Drahtrahmen 7 dienen. Alternativ oder zusätzlich kann das Versteifungselement auch aus einem oder mehreren Halteelementen 8 bestehen, die in jedem Einzelement 5 und 6 des Kerns eingelagert und mit ineinanderklipsbaren Zapfen 9 und Rastöffnungen 10 ausgebildet sind. Die Zapfen 9, die einen verdickten Kopfteil aufweisen, sind so angeordnet, daß ihnen jeweils eine Rastöffnung 10 des anderen Einzelelements 5 oder 6 des Kerns gegenübersteht. Daher können die Einzelelemente 5 und 6 schnell und einfach aneinander festgelegt werden. Nach dem Zusammenfügen der Einzelelemente 5 und 6 entsteht eine das optische Erscheinungsbild des Sonnenblendenkörpers 1 nicht beeinträchtigende Trennfuge 11 mittig in der umlaufenden Randkante des Sonnenblendenkörpers 1.

Beim Ausführungsbeispiel nach den Fig. 3, 4 und 7 bis 10 weist das Einzelelement 6 des hier ebenfalls aus Kunststoffschaum bestehenden Kerns an einer Breitseite eine Ausnehmung 12 auf, die sich unter Belassung einer peripherischen Randkante 13 über die Fläche des Einzelelements 6 erstreckt. Das Einzelelement 5 des Kerns ist hier entsprechend kleiner und schmaler ausgebildet, so daß es exakt in die Ausnehmung 12 paßt. Auch bei dieser Ausführungsform liegt eine Trennfuge 11 vor, die das angenehme Erscheinungsbild des Sonnenblendenkörpers 1 nicht beeinträchtigt, sondern im Gegenteil als zierend empfunden wird.

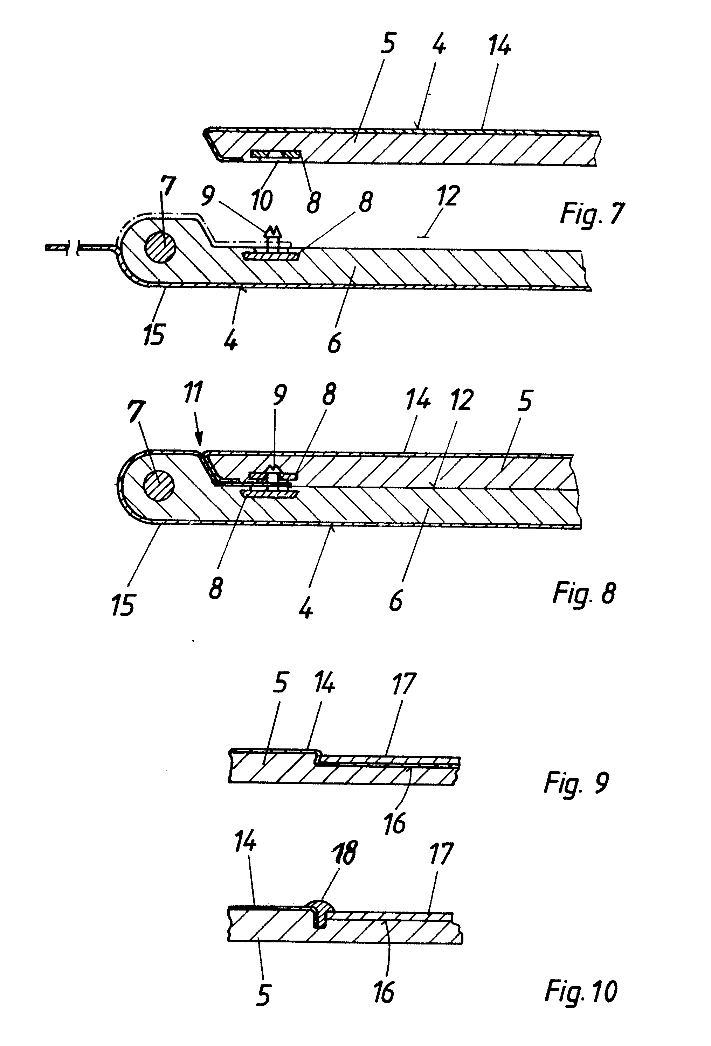

Der Bezug 4 besteht bei den Ausführungsbeispielen der Fig. 1 bis 8 aus zwei Bezugmaterial-Zuschnitten 14, 15 einer Kunststoffolie, eines textilen Flächengebildes, eines Naturleders od. dgl., von denen jeweils einer einem der Einzelelemente 5 und 6 zugeordnet ist. Jeder der Bezugmaterial-Zuschnitte 14, 15 ist größer als die Umrißkontur des zugehörigen Einzelelements 5 oder 6. Der dadurch umlaufend überstehende Randbereich der Bezugmaterial-Zuschnitte 14, 15 wird jeweils so umgelegt, daß er die Randkante der Einzelelemente 5, 6 umgreift. Dieses Umgreifen ist in den Fig. 5 und 7 strichpunktiert dargestellt. Nach dem Zusammenfügen der Einzelelemente 5, 6 sind die überstehenden Randkanten der Bezugmaterial-Zuschnitte 14, 15 in der Trennfuge 11 zwischen den Einzelelementen 5, 6 des Kerns eingeklemmt. Zweckmäßigerweise werden die umgelegten Randbereiche der Zuschnitte 14, 15 über die Zapfen 9 gedrückt, wodurch die Zuschnitte 14, 15 besser gehalten werden und wodurch das Zusammenbringen der Einzelelemente 5, 6 erleichtert wird.

Die Bezugmaterial-Zuschnitte 14, 15 können vor dem Schäumen der Einzelelemente 5, 6 des Kerns in die Schäumform eingebracht werden und gehen beim Schäumvorgang einen relativ festen Verbund mit dem Schaumstoff ein. Auf diese Weise kann ein späteres Ausrichten der Bezugmaterial-Zuschnitte 14, 15 eingespart werden. Es versteht sich am Rande, daß die Bezugmaterial-Zuschnitte 14, 15 z. B. farblich voneinander abweichen können, so daß die Erfindung auch bei zweifarbigen Sonnenblendenkörpern mit Vorteil realisierbar ist. Auch ist es ohne weiteres möglich, nur ein Einzelelement 5 oder 6 des Kernes mit einem Bezugmaterial-Zuschnitt zu versehen.

Fig. 9 zeigt einen Bereich des Einzelelements 5 mit einer außenseitigen Ausnehmung 16, in welche unter Einziehung des Bezugmaterial-Zuschnitts 14 ein Spiegel 17 eingepaßt ist. Der Ausnehmungsrand ist hier hinterschnitten ausgebildet, so daß der Spiegel 17 durch Einklipsen befestigbar ist.

Fig. 10 zeigt ebenfalls einen Bereich des Einzelelements 5 mit einer außenseitigen Ausnehmung 16, in welcher ein Spiegel 17 eingesetzt ist. Hier wird der Spiegel 17 durch einen in die Trennfuge zwischen Spiegelrand und Ausnehmungsrand eingepreßten Köder 18 gehalten. In dem Zuschnitt 14 ist für den Spiegel 17 ein fensterartiger Ausschnitt vorgesehen.

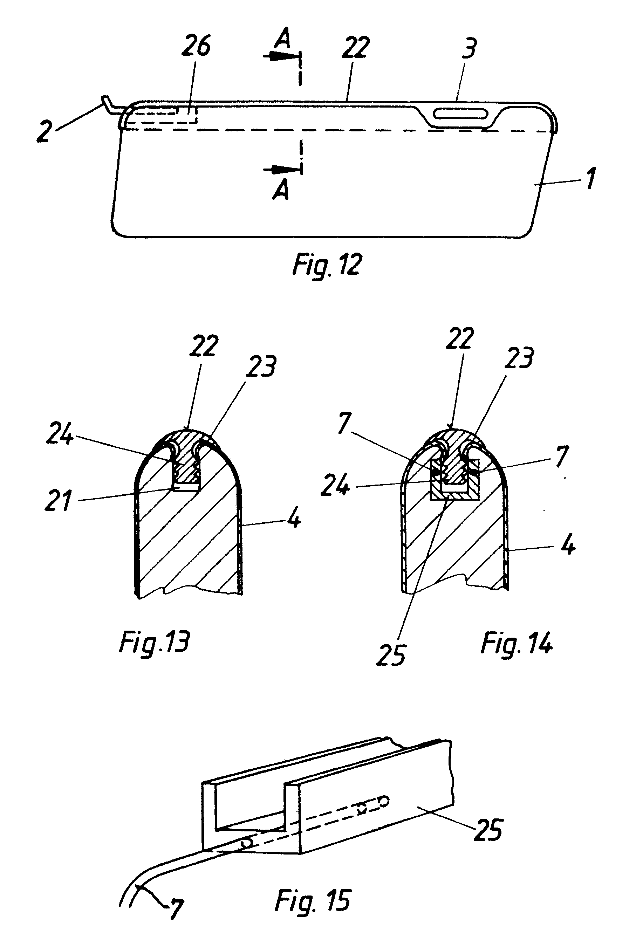

Bei dem in Fig. 11 dargestellten Ausführungsbeispiel ist der Kern einstückig, z. B. aus Schaumkunststoff ausgebildet und weist an seiner umlaufenden Randkante einen mittig angeordneten Schlitz 19 auf. In diesen Schlitz 19 sind die umlaufend überstehenden Randbereiche der Bezugmaterial-Zuschnitte 14, 15 eingefalzt, derart, daß sie zwischen den Schlitzwandungen zuverlässig fest klemmend gehalten sind. Zusätzlich oder aus optischen Gründen kann zwischen den eingeklemmten Randbereichen der Zuschnitte 14, 15 ein Köder 20 angeordnet sein, der eine bandförmige Ausbildung mit einer an einer Randkante durchlaufenden Verdickung aufweist. Auch bei diesem Ausführungsbeispiel ist selbstverständlich die Anordnung nur eines Bezugmaterial-Zuschnitts möglich.

Beim Ausführungsbeispiel nach Fig. 12 sitzt der Kern des Sonnenblendenkörpers in einem taschenförmig zusammengenähten (links genäht und dann umgestülpten) Bezug 4. Die Randbereiche an der offenen Seite des Bezuges 4 sind umgefalzt und klemmend in einem Schlitz 21 (Fig. 13) an einer Längskante des Sonnenblendenkörpers 1 festgelegt. Zur besseren Festlegung des Bezuges 4 ist in den Schlitz 21 ein Köder 22 eingebracht. Bei dem Köder 22 handelt es sich vorzugsweise um ein im Spritzgußverfahren erstelltes Kunststofformteil mit T-förmigem Querschnittsprofil, dessen horizontaler Schenkel 23 auf der Randkante des Sonnenblendenkörpers 1 aufliegt und dessen vertikaler Schenkel 24, der an seinen Außenseiten mit einer die Haltekraft vergrößernden Verzahnung versehen ist, in den Schlitz 21 eindringt.

Beim Einstecken des vertikalen Schenkels 24 des Köders 22 kommt es zu einem gewissen Aufspreizen des zumindest leicht hinterschnittenen Schlitzes 21 quer zu seiner Längsachse, was hohe Anforderungen an die Festigkeit des Kunststoffschaumstoffs, aus dem hier der Kern des Sonnenblendenkörpers 1 besteht, stellt. Aus diesem Grund ist beim Ausführungsbeispiel nach Fig. 14 in den Kunststoffschaumstoffkörper des Sonnenblendenkörpers 1 ein im Querschnitt etwa U-förmig ausgebildetes Einsatzteil 25 eingelagert, welches aus einem elastischen thermoplastischen Kunststoffmaterial bestehen kann. Ein solches Einsatzteil ist ohne weiteres in der Lage, die Spreizkräfte aufzunehmen und sich unter Einklemmung des Bezuges 4 federelastisch an den vertikalen Schenkel 24 des Köders 22 anzuschmiegen.

Zweckmäßigerweise ist das Einsatzteil 25 mit dem Drahtrahmen 7, der den Sonnenblendenkörper 1 aussteift, verbunden. Dabei können gemäß Fig. 14 zwei umgebogene Enden des Drahtrahmens 7 in entsprechende Bohrungen an den Stirnseiten des Einsatzteils eingesteckt sein, wie es auch möglich ist, jeweils nur ein Ende des Drahtrahmens 7 in den Stirnenden des Einsatzteils zu verankern, wie dies durch Fig. 15 verdeutlicht ist. Fig. 15 läßt auch eine leicht hinterschnittene Ausbildung des Schlitzes in dem Einsatzteil zur Steckaufnahme des vertikalen Schenkels 24 des Köders 22 erkennen.

Der Köder 22 (auch Keder genannt) dient nicht nur zur klemmenden Festlegung des Bezugmaterials, sondern er ist vorteilhafterweise einstückig, zumindest mit dem Lagerzapfen 3, vorzugsweise aber auch einstückig mit einer Lageraufnahme 26 für die Lagerachse 2 ausgebildet.

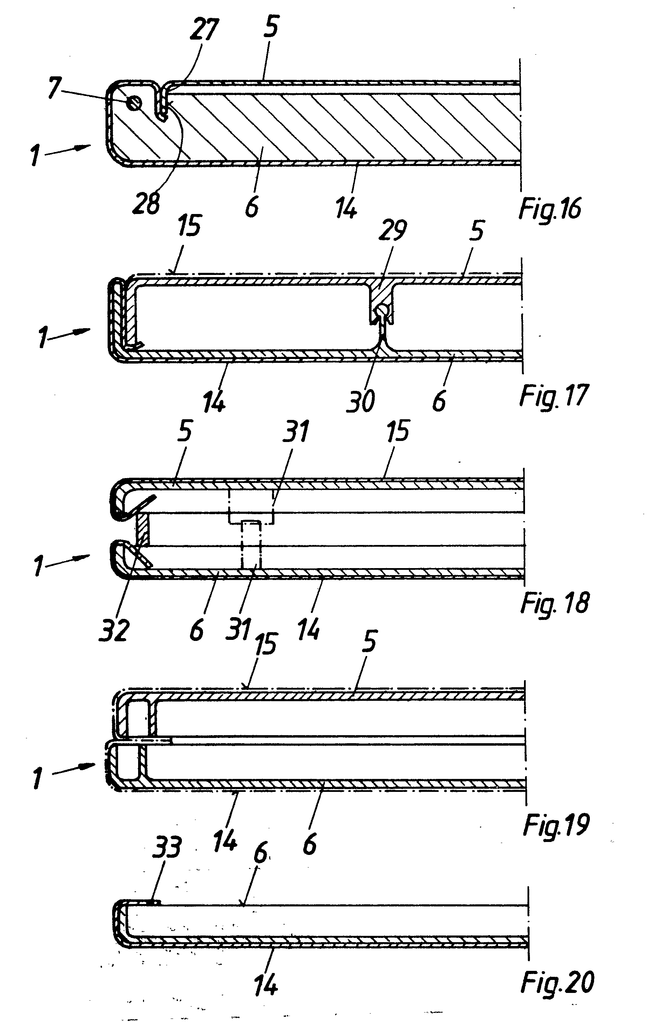

Beim Ausführungsbeispiel nach Fig. 16 besteht der Sonnenblendenkörper 1 aus zwei Einzelelementen 5 und 6, von denen das erstere aus einem Kunststoff-Spritzgußkörper und das zweite aus einem Kunststoff-Schaumkörper gegebenenfalls durch einen Drahtrahmen 7 versteift, gebildet ist. Das Einzelelement 5 weist eine Schalenform auf und greift mit seinem umlaufenden Rand 27 in eine umlaufende Schlitzausnehmung 28 des Einzelelements 6 ein. Dabei wird ein Bezugmaterial-Zuschnitt 14 zuverlässig eingeklemmt.

Fig. 17 zeigt eine erfindungsgemäße Lösung, bei der der Sonnenblendenkörper 1 aus zwei Einzelelementen 5 und 6 besteht, die beide als schalenförmige Kunststoffspritzgußkörper ausgebildet sind. Das Einzelelement 5 besitzt einen etwa dem Öffnungsquerschnitt des Einzelelements 6 entsprechenden Außenumfang, so daß die beiden Elemente, mit ihren offenen Enden voran, ineinandergesetzt werden können. Der Zusammenhalt kann dabei durch an den Elementen angeformte Klipsausbildungen 29 und 30 erfolgen. Ein um zumindest eines der Einzelelemente 5, 6 gelegter Bezugmaterial-Zuschnitt 14 wird beim Zusammenstecken der Einzelelemente 5, 6 an seinem umlaufenden Randbereich, wie aus der Zeichnung ersichtlich, festgeklemmt. Das gleiche gilt für einen zweiten Bezugmaterial-Zuschnitt 15, der nur strichpunktiert angedeutet ist, sofern eine vollständige Umhüllung des Sonnenblendenkörpers 1 gewünscht wird.

Fig. 18 zeigt einen Sonnenblendenkörper 1, der aus zwei gleich ausgebildeten Einzelelementen 5, 6 besteht, die durch nur strichpunktiert angedeutete Klipselemente 31 aneinander festgelegt werden können, wobei dann die Stirnenden der Randkanten gegeneinandertreffen. Zum Festklemmen eines Bezugmaterial-Zuschnitts 14 und/oder 15 dient hier zusätzlich ein Spannring 32, der aus Kunststoff bestehen kann, dessen Außenumfang in etwa dem Öffnungsquerschnitt der Einzelelemente 5, 6 entspricht.

Auch beim Ausführungsbeispiel nach Fig. 19 besteht der Sonnenblendenkörper aus zwei Einzelelementen 5 und 6, die als Kunststoffspritzgußteile ausgebildet sind und einen schalenförmigen Aufbau aufweisen. Die gegeneinander gerichteten Randkanten der Einzelelemente 5, 6 sind doppelwandig ausgebildet, so daß sich beim Zusammenstecken der Einzelelemente 5, 6 eine Nut-Feder-Verbindung ergibt, durch die ein besonders günstiges Festklemmen der Bezugmaterial-Zuschnitte 14 und/oder 15, die hier nur strichpunktiert angedeutet sind, bewirkt wird. Auch beim Ausführungsbeispiel nach Fig. 19 können die Einzelelemente mit ineinandergreifenden Klipselementen 29, 30, 31 ausgebildet sein.

Sofern die Einzelelemente des Sonnenblendenkörpers 1 als Kunststoffspritzgußteile ausgebildet sind, (wie anhand der Ausführungsbeispiele 17 bis 19 beschrieben) ergibt sich vorteilhafterweise die Möglichkeit, entweder die Lageraufnahmen für die Lagerachse 2 einstückig mit anzuformen oder Sitzflächen zu bilden, in die getrennt hergestellte Lageraufnahmen eingesteckt werden können.

Fig. 20 läßt noch eine zweckmäßige Einzelheit der Erfindung erkennen, die darin besteht, am Umfangsrand des Bezugmaterial-Zuschnitts 14, 15 einen Faden 33 einzubringen, der das Zusammenziehen des Bezugmaterial-Zuschnitts 14, 15 erlaubt und vorzugsweise aus einem gummielastischen Material besteht. Durch diese Maßnahme wird die Anordnung eines Bezugs 4 an dem Sonnenblendenkörper erleichtert.

**Patentansprüche**

1. Sonnenblende für Fahrzeuge mit einem Sonnenblendenkörper (1), der mit einem Bezugmaterial (14, 15) versehen ist, dadurch gekennzeichnet, daß der Sonnenblendenkörper (1) einen Klemmbereich zur Festlegung des an einer oder beiden seiner Breitseiten angeordneten Bezugmaterials (14, 15) aufweist.

2. Sonnenblende nach Anspruch 1, dadurch gekennzeichnet, daß der Klemmbereich für die Aufnahme des umlaufenden Randbereichs wenigstens eines Bezugmaterial-Zuschnitts (14 oder 15) umlaufend ausgebildet ist.

3. Sonnenblende nach Anspruch 1, dadurch gekennzeichnet, daß der Klemmbereich an einer, vorzugsweise Längskante des Sonnenblendenkörpers (1) ausgebildet ist.

4. Sonnenblende nach Anspruch 1 oder 2, dadurch gekennzeichnet, daß der Sonnenblendenkörper (1) aus zwei miteinander verbundenen Einzelelementen (5, 6) zusammengesetzt ist, von denen zumindest eines einseitig mit einem gegenüber seiner Umrißkontur größeren Bezugmaterial-Zuschnitts (14, 15) abgedeckt ist, dessen umlaufend überstehender Randbereich die umlaufende Randkante des Einzelelements (5, 6) umgreift und zwischen den Einzelelementen (5, 6) eingeklemmt ist.

5. Sonnenblende nach Anspruch 4, dadurch gekennzeichnet, daß an den Einzelelementen (5, 6) Zapfen (9) angeordnet sind, welche die Randbereiche des oder der Bezugmaterial-Zuschnitte (14, 15) durchdringen.

6. Sonnenblende nach Anspruch 4 oder 5, dadurch gekennzeichnet, daß die Zapfen (9) jedes Einzelelements (5, 6) einen verdickten Kopfteil aufweisen und jeweils klipsartig in diese aufnehmende Rastöffnungen (10) des anderen Einzelelements (5, 6) eingreifen.

7. Sonnenblende nach einem oder mehreren der Ansprüche 4 bis 6, dadurch gekennzeichnet, daß die Einzelelemente (5, 6) deckungsgleich zueinander ausgebildet sind.

8. Sonnenblende nach einem oder mehreren der Ansprüche 4 bis 6, dadurch gekennzeichnet, daß ein Einzelelement (5 oder 6) an einer Breitseite eine längliche Ausnehmung (12) aufweist, in die das andere, entsprechend kleiner und schmaler ausgebildete Einzelelement (5 oder 6) eingepaßt ist.

9. Sonnenblende nach Anspruch 8, dadurch gekennzeichnet, daß sich die Ausnehmung (12) unter Belassung einer peripherischen Randkante (13) über die Fläche des Einzelelements (5 oder 6) erstreckt.

10. Sonnenblende nach einem oder mehreren der Ansprüche 4 bis 9, dadurch gekennzeichnet, daß die Einzelelemente (5, 6) aus Kunststoffschaum bestehen.

11. Sonnenblende nach einem oder mehreren der Ansprüche 4 bis 9, dadurch gekennzeichnet, daß eines der Einzelelemente (5 oder 6) aus Kunststoffschaum und das andere aus einem Kunststoffspritzgußteil besteht.

12. Sonnenblende nach einem oder mehreren der Ansprüche 4 bis 9, dadurch gekennzeichnet, daß die Einzelelemente (5, 6) als Kunststoffspritzgußteile ausgebildet sind.

13. Sonnenblende nach Anspruch 12, dadurch gekennzeichnet, daß die Einzelelemente (5, 6) schalenförmig ausgebildet sind und im zusammengesetzten Zustand einen Hohlraum umschließen.

14. Sonnenblende nach einem oder mehreren der Ansprüche 1 bis 13, gekennzeichnet durch eine den Sonnenblendenkörper (1) aussteifende Einlage.

15. Sonnenblende nach Anspruch 14, dadurch gekennzeichnet, daß die Einlage aus einem zwischen den Einzelelementen (5, 6) angeordneten Drahtrahmen (7) und aus in die Einzelelemente (5, 6) eingelagerte, mit Zapfen (9) und Rastöffnungen (10) ausgebildeten Halteelementen (8) besteht.

16. Sonnenblende nach einem oder mehreren der Ansprüche 1 bis 3, dadurch gekennzeichnet, daß der Sonnenblendenkörper (1) aus einem einstückigen durch eine Verstärkungseinlage ausgesteiften Kern besteht, dessen Klemmbereich zur Festlegung des zumindest an einer seiner Breitseiten angeordneten Bezugmaterials (14, 15) aus einem umlaufenden Schlitz (19) besteht, in den der umlaufende Randbereich zumindest eines Bezugmaterial-Zuschnitts (14, 15) eingeklemmt ist.

17. Sonnenblende nach Anspruch 16, dadurch gekennzeichnet, daß der in den umlaufenden Schlitz (19) eingeklemmte Randbereich zumindest eines Bezugmaterial-Zuschnitts (14 oder 15) zusätzlich durch einen in den Schlitz (19) eingebrachten Köder (20) gesichert ist.

18. Sonnenblende nach einem oder mehreren der Ansprüche 1 bis 17, gekennzeichnet durch einen am Umfang des Bezugmaterial-Zuschnitts eingebrachten vorzugsweise gummielastischen Faden (33).

19. Sonnenblende nach einem oder mehreren der Ansprüche 4 bis 18, dadurch gekennzeichnet, daß die Einzelelemente (5, 6) des Sonnenblendenkörpers (1) an ihren einander zugewandten Innenseiten in der Nähe des Außenrandes jeweils eine umlaufend angeordnete und unter Einschluß des umlaufenden Randbereichs zumindest eines Bezugmaterial-Zuschnitts (14 oder 15) ineinandergreifende Nut und Feder bzw. Rille und darin eingreifenden Steg aufweisen.

20. Sonnenblende nach Anspruch 1 oder 3, dadurch gekennzeichnet, daß der Sonnenblendenkörper (1) aus einem einstückigen durch eine Verstärkungseinlage ausgesteiften Kern besteht, dessen Klemmbereich zur Festlegung der offenen Seite eines taschenförmig ausgebildeten Bezuges (4) aus einem an einer Längskante angeordneten Schlitz (21) besteht, in den die Randbereiche des Bezuges (4) eingeklemmt sind.

21. Sonnenblende nach Anspruch 20, dadurch gekennzeichnet, daß der eingeklemmte Bezug (4) durch einen fest in den Schlitz (21) eingebrachten Köder (22) gesichert ist.

22. Sonnenblende nach Anspruch 20 und 21, dadurch gekennzeichnet, daß der Kern im Schlitzbereich ein im Querschnitt etwa U-förmig ausgebildetes Einsatzteil (25) aufweist, welches mit der den Kern aussteifenden Verstärkungseinlage (7) verbunden ist und welches den Köder (22) aufnimmt.

23. Sonnenblende nach einem oder mehreren der Ansprüche 20 bis 22, dadurch gekennzeichnet, daß der Köder (22) einstückig mit einer Lageraufnahme (26) für eine Lagerachse (2) und einstückig mit einer Gegenlagerachse (3) ausgebildet ist.

24. Sonnenblende nach einem oder mehreren der Ansprüche 4 bis 23, dadurch gekennzeichnet, daß an einer Außenseite eines der Einzelelemente (5, 6) bzw. des Kerns eine Ausnehmung (16) eingearbeitet ist, in die unter Einziehung des Bezuges (4) ein Spiegel (17) eingesetzt ist, welcher durch eine hinterschnittene Ausbildung des Ausnehmungsrandes oder durch einen in die Trennfuge zwischen Spiegel (17) und Ausnehmungsrand eingesetzten Köder (18) gehalten ist.

25. Sonnenblende, insbesondere nach Anspruch 13, gekennzeichnet durch einen in den durch die Einzelelemente (5, 6) gebildeten Hohlraum eingelegten Klemmring (32), der sich umlaufend gegen die Innenwandung der Randkanten der Einzelelemente (5, 6) unter Einklemmung mindestens eines Bezugmaterial-Zuschnitts (14 oder 15) abstützt.

## Claims

1. A sun visor for a vehicle, the visor comprising a visor body (1) fitted with a casing material (14, 15), characterized in that the visor body (1) is provided with a wedging zone for fixing the casing material (14, 15) arranged on either one or both of its main surfaces.

2. A sun visor according to claim 1, characterized in that the wedging zone for accommodating the peripherally continuous edge portion of at least one pre-cut blank (14 or 15) of the casing material is peripherally continuous.

3. A sun visor according to claim 1, characterized in that the wedging zone is disposed along one edge, preferably a longitudinal one, of the visor body (1).

4. A sun visor according to claim 1 or claim 2, characterized in that the visor body (1) is made up of two separate components (5, 6) joined to one another, that one main surface of at least one of them is covered by a blank (14, 15) of the casing material pre-cut to a size exceeding that component's outer contour, and in that the blank's projecting peripherally continuous edge portion encloses the peripheral edge of said one separate component (5, 6) and is wedged between the two separate components (5, 6).

5. A sun visor according to claim 4, characterized in that each of the separate components (5, 6) is provided with pegs (9) which penetrate the edge portion, or portions, of the casing material blank or blanks (14, 15).

6. A sun visor according to claim 4 or claim 5, characterized in that the pegs (9) of each of the components (5, 6) are each provided with a cross-sectionally enlarged head engaging, in click-in fashion, a respective latching aperture (10) provided on the other component (5, 6) and arranged to receive it.

7. A sun visor according to any one or more of the claims 4 to 6, characterized in that the components (5, 6) are dimensionally coincident.

8. A sun visor according to any one or more of the claims 4 to 6, characterized in that one of the components (5 or 6) is provided at one of its main surfaces with an oblong recess (12) into which the other correspondingly smaller and thinner component (5 or 6) is fitted.

9. A sun visor according to claim 8, characterized in that the recess (12) except for a peripherally continuous edge portion (13) extends over the whole area of said surface of the one component (5 or 6).

10. A sun visor according to any one or more of the claims 4 to 9, characterized in that each of the separate components (5, 6) is made of an expanded plastics material.

11. A sun visor according to any one or more of the claims 4 to 9, characterized in that one of the separate components (5 or 6) is made of an expanded plastics material and the other one of an injection-moulded plastics material.

12. A sun visor according to any one or more of the claims 4 to 9, characterized in that each of the separate components (5, 6) is made of an injection-moulded plastics material.

13. A sun visor according to claim 12, characterized in that the components (5, 6) are dish-shaped and enclose, when joined to one another, a hollow space.

14. A sun visor according to any one or more of the claims 1 to 13, characterized by an insert reinforcing the visor body (1).

15. A sun visor according to claim 14, characterized in that the insert comprises a wire frame (7) arranged between the separate components (5, 6) and retaining elements (8) embedded in the components (5, 6) and being provided with the pegs (9) and latching apertures (10).

16. A sun visor according to any one or more of the claims 1 to 3, characterized in that the visor body (1) is a one-piece core strengthened by a reinforcing insert, and in that the core's wedging zone for fixing the casing material (14, 15) arranged over at least one of its main surfaces is a peripherally continuous slot (19) in which the peripherally continuous edge portion of at least one pre-cut blank (14, 15) of the casing material is wedged.

17. A sun visor according to claim 16, characterized in that the edge portion of the at least one pre-cut blank (14, 15) of the casing material wedged in the continuous slot (19) is additionally secured by a sealing strip (20).

18. A sun visor according to any one or more of the claims 1 to 17, characterized by a cord (33), preferably having the elasticity of rubber, introduced into the periphery of the blank or blanks of the casing material.

19. A sun visor according to any one or more of the claims 4 to 18, characterized in that the separate components (5, 6) of the visor body (1) are provided at their opposing inner surfaces and close to their respective edges with a peripherally continuous groove and, respectively, a tongue, or with a peripherally continuous keyway and, respectively, a meshing key, and in that the grove and tongue, or the keyway and key, interlock and entrap the peripherally continuous edge portion of at least one blank (14 or 15) of the casing material.

20. A sun visor according to claim 1 or claim 3, characterized in that the visor body (1) is a one-piece core strengthened by a reinforcing insert, and in that the core's wedging zone for fixing the open end of a pouch-like casing (4) is a slot (21) which extends along one of its longitudinal edges and in which the edge portions of the casing (4) are wedged.

21. A sun visor according to claim 20, characterized in that the wedged casing (4) is secured by a sealing strip (22) firmly inserted into the slot (21).

22. A sun visor according to claim 20 or claim 21, characterized in that the core is provided in the region of the slot with an inlay (25) which — in a cross-sectional view thereof — is substantially U-shaped, which is joined to the reinforcing insert (7) strengthening the core and which houses the sealing strip (22).

23. A sun visor according to any one or more of the claims 20 to 22, characterized in that the sealing strip (22) is formed integrally with a mounting bush (26) for a mounting shaft (2) and with a shaft (3) of a counter mounting.

24. A sun visor according to any one or more of the claims 4 to 23, characterized in that one of the outer main surfaces of one of the separate components (5, 6) or of the one-piece core is provided with a recess (16) into which a mirror (17) is fitted in such a way as to fasten the casing (4), and in that the mirror is held in position by virtue of the side walls of the recess being back-tapered or by means of a sealing strip (18) inserted into a gap between the mirror (17) and the side wall or walls of the recess.

25. A sun visor, particularly according to claim 13, characterized by a wedging ring (32) inserted into the hollow space enclosed by the separate components (5, 6), the ring abutting all round against the internal faces of the peripheral edges of the components (5, 6) and simultane-ously fastening at least one blank (14 or 15) of the casing material.

## Revendications

1. Pare-soleil pour véhicule, comprenant un corps de pare-soleil (1) muni d'un matériau de recouvrement (14, 15), caractérisé en ce que le corps (1) du pare-soleil comprend une zone de serrage pour la fixation du matériau de recouvrement (14, 15) disposé sur l'une de ses faces ou sur ses deux faces.

2. Pare-soleil selon la revendication 1, caractérisé en ce que la zone de serrage destinée à la réception de la zone de bord périphérique d'au moins une section de matériau de recouvrement (14 ou 15) est constituée sur sa périphérie.

3. Pare-soleil selon la revendication 1, caractérisé en ce que la zone de serrage est constituée sur un côté de préférence longitudinal du corps (1) du pare-soleil.

4. Pare-soleil selon la revendication 1 ou 2, caractérisé en ce que le corps (1) du pare-soleil est formé par l'assemblage de deux éléments individuels (5, 6) réunis l'un à l'autre, dont l'un au moins est recouvert sur un côté d'une section de matériau de recouvrement (14, 15) dépassant sa périphérie, dont la partie de bord périphérique en saillie entoure le bord périphérique de l'élément individuel (5, 6) et est serrée entre lesdits éléments individuels (5, 6).

5. Pare-soleil selon la revendication 4, caractérisé en ce que sont prévus sur les éléments individuels (5, 6) des tenons (9) qui traversent la zone de bord de la ou des sections de matériau de recouvrement (14, 15).

6. Pare-soleil selon la revendication 4 ou 5, caractérisé en ce que les tenons (9) de chaque élément individuel (5, 6) comprennent une partie de tête épaissie et peuvent respectivement s'enfoncer par enclenchement dans des ouvertures d'arrêt (10) de l'autre élément individuel (5, 6) qui les reçoivent.

7. Pare-soleil selon l'une ou plusieurs des revendications 4 à 6, caractérisé en ce que les éléments individuels (5, 6) sont de forme égale et symétrique.

8. Pare-soleil selon l'une ou plusieurs des revendications 4 à 6, caractérisé en ce que un élément individuel (5 ou 6) comprend sur un côté large un évidement longitudinal (12) dans lequel se dispose l'autre élément individuel (5 ou 6) qui est en proportions plus petit et plus étroit.

9. Pare-soleil selon la revendication 8, caractérisé en ce que l'évidement (12) s'étend sur la surface de l'élément individuel (5 ou 6) à l'exception d'un bord marginal périphérique (13).

10. Pare-soleil selon l'une ou plusieurs des revendications 4 à 9, caractérisé en ce que les éléments individuels (5, 6) sont en mousse synthétique.

11. Pare-soleil selon l'une ou plusieurs des revendications 4 à 9, caractérisé en ce que l'un des éléments individuels (5 ou 6) est en mousse synthétique et l'autre en une pièce de matière synthétique moulée par injection.

12. Pare-soleil selon l'une ou plusieurs des revendications 4 à 9, caractérisé en ce que les éléments individuels (5, 6) sont constitués par des parties en maitère synthétique moulée par injection.

13. Pare-soleil selon la revendication 12, caractérisé en ce que les éléments individuels (5, 6) ont la forme de coquilles et entourent une cavité quand ils sont assemblés.

14. Pare-soleil selon l'une ou plusieurs des revendications 1 à 13, caractérisé par une garniture rendant rigide le corps (1) du paresoleil.

15. Pare-soleil selon la revendication 14, caractérisé en ce que la garniture est constituée par un cadre en fil métallique (7) disposé entre les éléments individuels (5, 6) et en des éléments de retenue (8) montés dans les éléments individuels (5, 6) et comprenant des tenons (9) et des ouvertures d'arrêt (10).

16. Pare-soleil selon l'une ou plusieurs des revendications 1 à 3, caractérisé en ce que le corps (1) du pare-soleil est constitué par un coeur en une seule pièce rendu rigide par une garniture de renforcement, dont la zone de serrage destinée à la fixation d'un matériau de recouvrement (14, 15) disposé au moins sur l'une de ses faces est constituée par une fente périphérique (19) dans laquelle est serrée la partie de bord périphérique d'au moins une section de matériau de recouvrement (14, 15).

17. Pare-soleil selon la revendication 16, caractérisé en ce que la zone de bord d'au moins une section de matériau de recouvrement (14, 15) serrée dans la fente périphérique (19) est retenue en plus par un jonc (20) disposé dans la fente (19).

18. Pare-soleil selon l'une ou plusieurs des revendications 1 à 17, caractérisé par un fil (33) de préférence en caoutchouc passé dans la périphérie de la section de matériau de recouvrement.

19. Pare-soleil selon l'une ou plusieurs des revendications 4 à 18, caractérisé en ce que les éléments individuels (5, 6) du corps (1) du paresoleil comprennent dans leurs côtés intérieurs tournés l'un vers l'autre, à proximité du bord extérieur, respectivement une rainure et languette pénétrant l'une dans l'autre ou une gorge et une branche pénétrant dans celle-ci, disposées périphériquement et retenant la zone de bord périphérique d'au moins une section de matériau de recouvrement (14, 15).

20. Pare-soleil selon la revendication 1 ou 3, caractérisé en ce que le corps (1) du pare-soleil est constitué par un coeur en une seule pièce rendu rigide par une garniture de renforcement, dont la zone de serrage destinée à la fixation du côté ouvert d'un revêtement (4) en forme de poche est constituée par une fente (21) disposée sur un bord longitudinal et dans laquelle sont serrées les zones de bord du revêtement (4).

21. Pare-soleil selon la revendication 20, caractérisé en ce que le revêtement (4) une fois serré est retenu par un jonc (22) qui est fixé dans la fente (21).

22. Pare-soleil selon la revendication 20 ou 21, caractérisé en ce que le coeur comprend dans la zone de la fente un insert (25) de section approximative en U, qui es relié à la garniture de renforcement (7) qui rend le coeur rigide et qui reçoit le jonc (22).

23. Pare-soleil selon l'une ou plusieurs des revendications 20 à 22, caractérisé en ce que le jonc (22) est en une seule pièce avec un logement (26) destiné à un axe de palier (2) et en une seule pièce avec un contre-axe (33).

24. Pare-soleil selon l'une ou plusieurs des revendications 4 à 23, caractérisé en ce que sur un côté extérieur de l'un des éléments individuels (5, 6) ou du coeur est pratiqué un évidement (16) dans lequel est fixé un miroir (17) dans un enfoncement du revêtement (4), miroir qui est retenu par une forme en contre-dépouille du bord de l'évidement ou par un jonc (18) inséré dans la jonction de séparation entre le miroir (17) et le bord de l'évidement.

25. Pare-soleil, en particulier selon la revendication 13, caractérisé par un anneau de serrage (32) enfoncé dans la cavité formée par les éléments individuels (5, 6), qui s'appuie périphériquement contre la paroi intérieure du bord périphérique des éléments individuels (5, 6) en serrant au moins une section du matériau de recouvrement (14 ou 15).

Fig. 1

Fig. 2

Fig. 3

Fig. 4

Fig. 5

Fig.6

Fig.11

0 058 742

Fig. 7

Fig. 8

Fig. 9

Fig. 10

13

Fig. 12

Fig. 13

Fig. 14

Fig. 15

Fig. 16

Fig. 17

Fig. 18

Fig. 19

Fig. 20